# EUROPÄISCHE PATENTSCHRIFT

(11) **EP 0 385 196 B1**
(45) Veröffentlichungstag und Bekanntmachung des Hinweises auf die Patenterteilung: **03.11.1993**
(21) Anmeldenummer: 90102991.8
(22) Anmeldetag: 16.02.1990
(51) Int. Cl.: F16H 21/44, B62D 7/15

(54) **Getriebe mit veränderbarem Übersetzungsverhältnis**
Transmission with variable ratio
Transmission à rapport de vitesse variable

(30) Priorität: 25.02.1989 DE 3905979
(43) Veröffentlichungstag der Anmeldung: 05.09.1990
(73) Patentinhaber: DAIMLER-BENZ AKTIENGESELLSCHAFT, 70327 Stuttgart (DE)
(72) Erfinder: Mehren, Herbert, Dipl.-Ing., D-7149 Freiberg (DE)

(56) Entgegenhaltungen:
- EP-A- 0 259 690
- DE-A- 2 339 540
- DE-A- 3 707 700
- FR-A- 1 560 712
- US-A- 4 088 039
- US-A- 4 598 890
- PATENT ABSTRACTS OF JAPAN vol. 13, no. 299 (M-847)(3647) 11 Juli 1989, & JP-A-1 90875 (ISUZU) 07 April 1989

## Beschreibung

Die Erfindung betrifft ein Getriebe mit veränderbarem Übersetzungsverhältnis zwischen den Stellwegen eines Eingangs- und eines Ausgangselementes, wobei das Eingangselement mit einer stationär drehgelagerten Schwinge und die Schwinge über einen Lenker gelenkig mit dem Ausgangselement gekoppelt und das schwingenseitige Gelenk des Lenkers mittels eines Stellaggregates relativ zur Schwinge auf einer die stationäre Schwenkachse der Schwinge durchsetzenden Bogenbahn verstellbar ist, deren Zentrum in der einer Mittel- bzw. Ausgangslage des Eingangselementes zugeordneten Normalstellung der Schwinge in die zur stationären Schwenkachse der Schwinge parallele Achse des ausgangsseitigen Gelenkes des Lenkers fällt.

Derartige Getriebe sind aus der DE-A- 37 07 700 sowie der DE-A- 23 39 540 bekannt.

Bei dem in der DE-A- 37 07 700 dargestellten Getriebe kann das Übersetzungsverhältnis zwischen den Stellwegen einer eingangsseitigen Schubstange sowie einer ausgangsseitigen Schubstange verändert werden. Dabei ist die eingangsseitige Schubstange gelenkig mit einer Schwinge gekoppelt, die an einem stationären Lager mit Abstand von der gelenkigen Verbindung zwischen eingangsseitiger Schubstange und Schwinge drehbar gelagert ist. Die ausgangsseitige Schubstange, welche nach Art eines Lenkers zwischen einem ausgangsseitig angeordneten Hebel und der Schwinge angeordnet ist, ist mit der Schwinge über ein Gelenk gekoppelt, dessen Lage an der Schwinge mittels eines Spindelaggregates auf einer Kurvenbahn verstellbar ist. Diese Kurvenbahn ist auf der Schwinge derart angeordnet und besitzt einen derart bemessenen Kurvenradius, daß eine Verstellung des Gelenkes auf der Schwinge keinerlei Stellhub der ausgangsseitigen Schubstange bewirkt, wenn die eingangsseitige Schubstange eine Normal- oder Mittellage einnimmt.

Je nach Lage des Gelenkes auf der Schwinge ändert sich das Übersetzungsverhältnis zwischen der eingangsseitigen sowie der ausgangsseitigen Schubstange, wobei diese Schubstangen gleichsinnige Stellhübe ausführen, wenn das auf der Kurvenbahn verstellbare Gelenk relativ zum Schwenklager der Schwinge in Richtung des Gelenkes zwischen eingangsseitiger Schubstange und Schwinge verschoben ist, während die Schubstangen zueinander entgegengerichtete Stellhübe ausführen, wenn das auf der Kurvenbahn verschiebbare Gelenk vom schwingenseitigen Schwenklager aus auf der Schwinge in entgegengesetzter Richtung verschoben ist. Solange das verstellbare Schwenklager gleichachsig zur Achse des schwingenseitigen Schwenklagers liegt, bleibt die ausgangsseitige Schubstange unabhängig vom Stellhub der eingangsseitigen Schubstange in Ruhe.

Bei dieser bekannten Konstruktion wird das Übersetzungsverhältnis zwischen den Stellhüben der Schubstangen also durch die Lage des auf der Kurvenbahn verstellbaren Gelenkes relativ zur Schwinge bestimmt. Die entsprechende Einstellung des Übersetzungsverhältnisses erfolgt mittels des Spindelaggregates, welches in üblicher Weise selbsthemmend arbeitet. Dies ist gleichbedeutend damit, daß das einmal eingestellte Übersetzungsverhältnis in jedem Falle unverändert bleibt, wenn die Steuerung bzw. Energieversorgung des Spindelaggregates ausfallen sollte.

Dies kann bei vielen Anwendungsfällen zu erheblichen Schwierigkeiten führen. Wenn beispielsweise im Falle einer Vierradlenkung eines Kraftfahrzeuges zuletzt eine Übersetzung eingestellt wurde, bei der die Vorderräder und Hinterräder des Fahrzeuges in zueinander entgegengesetzten Richtungen ausgelenkt werden, ergibt sich ein extrem direktes Lenkverhalten des Fahrzeuges, d.h. bei kleinen Bewegungen des Lenkhandrades wird der Krümmungsradius der vom Fahrzeug bei schlupffreier Fahrt durchfahrenen Kurve ganz erheblich verändert. Ein solches Fahrzeug läßt sich bei höheren Geschwindigkeiten nicht mehr sicher handhaben.

Im übrigen ist bei der aus der DE-A- 37 07 700 bekannten Konstruktion nachteilig, daß das auf der Kurvenbahn verstellbare Gelenk an der Schwinge in einer Kulisse od.dgl. verschiebbar geführt ist. Damit wird ein hoher konstruktiver Aufwand notwendig, wenn eine große Präzision erreicht werden soll.

Eine ähnliche Konstruktion ist Gegenstand der DE-A- 23 39 540. Hier ist wiederum eine eingangsseitige Schubstange mit einer als Steuerhebel bezeichneten Schwinge gelenkig gekoppelt, die um ein stationäres Lager schwenkbar angeordnet ist. An dieser Schwinge ist ein Hebelarm angeordnet, dessen freies Gelenk mit einem ersten Ausgangselement gekoppelt ist. Der Stellhub dieses ersten Ausgangselementes hängt lediglich vom Stellhub der eingangsseitigen Schubstange ab, denn das zugehörige Übersetzungsverhältnis läßt sich nicht verändern.

Des weiteren ist die Schwinge über einen Lenker mit einem weiteren Ausgang gekoppelt, wobei sich das Übersetzungsverhältnis zwischen den Stellhüben der eingangsseitigen Schubstange und dem weiteren Ausgang verändern läßt. Hierzu läßt sich das Gelenk zwischen Schwinge und Lenker an der Schwinge in einer Kurvenbahn verschieben, welche zwei einander bezüglich der Achse des stationären Schwenklagers gegenüberliegende Abschnitte aufweist. Wenn also das verschiebbare Gelenk eine zur Achse des stationären Schwenklagers gleichachsige Lage einnimmt, bleibt der Lenker unabhängig von der Bewegung der eingangsseitigen Schubstange in Ruhe, während der Lenker relativ zur eingangsseitigen Schubstange entgegengerichtete oder gleichgerichtete Stellhübe ausführt, je nachdem, ob das verschiebbare Gelenk relativ zur Achse des stationären Schwenklagers auf der einen oder anderen Seite innerhalb der Kurvenbahn liegt.

Die Verstellung des letztgenannten Gelenkes innerhalb der Kurvenbahn erfolgt mittels eines Gestänges, welches offensichtlich selbsthemmend arbeiten soll. Jedenfalls kann der DE-A- 23 39 540 an keiner Stelle ein Hinweis darauf entnommen werden, daß sich bei Ausfall des Antriebes oder der Steuerung des Gestänges eine bestimmte Lage des verschiebbaren Gelenkes an der Schwinge einstellen soll. Es ist lediglich vorgesehen, die Schwinge mittels einer Rückholfeder in eine durch einen Anschlag vorgegebene Lage zu bringen, wenn auf die eingangsseitige Schubstange keine oder nur geringe Kräfte einwirken.

Ebenso wie im Falle der Konstruktion gemäß der DE-A- 37 07 700 wird also bei der Anordnung nach der DE-A- 23 39 540 bei Ausfall eines zur Steuerung des Übersetzungsverhältnisses dienenden Antriebes oder seiner Steuerung kein vorgegebenes Übersetzungsverhältnis eingestellt. Vielmehr wird das jeweils zuletzt eingestellte Übersetzungsverhältnis unverändert beibehalten.

Im übrigen ist auch nach der DE-A- 23 39 540 wiederum vorgesehen, daß das an der Schwinge verschiebbare Gelenk in einer Schiebeführung gehaltert ist, die einen relativ hohen konstruktiven Aufwand notwendig macht, wenn größere Präzisionsanforderungen zu erfüllen sind.

Aufgabe der Erfindung ist es nun, ein Getriebe mit steuerbarer Übersetzung zu schaffen, welches in Kraftfahrzeugen zur antriebsmäßigen Kopplung einer Hinterradlenkung an die Vorderradlenkung geeignet ist und sich durch vergleichsweise geringen konstruktiven Aufwand auszeichnet.

Diese Aufgabe wird erfindungsgemäß dadurch gelöst, daß an der Schwinge ein Stellhebel angeordnet ist, an dessen freiem Ende das schwingenseitige Gelenk des Lenkers angelenkt ist und dessen schwingenseitige Lagerachse in der Normalstellung der Schwinge mit der Achse des ausgangsseitigen Gelenkes des Lenkers zusammenfällt, und daß der Stellhebel mittels des Stellaggregates, welches selbsthemmungsfrei ausgebildet und zwischen Schwinge und Stellhebel angeordnet ist, steuerbar und mittels eines Federaggregates relativ zur Schwinge in seine eine Endlage beaufschlagt ist, in der das maximale Übersetzungsverhältnis eingestellt ist.

Die Erfindung bietet auch bei einer Störung einer automatisch erfolgenden Steuerung des Übersetzungsverhältnisses eine besonders hohe Sicherheit. Für die automatische Steuerung wird typischerweise ein Rechner verwendet, welcher sich ständig auf fehlerfreies Arbeiten überprüft. Sollte ein Fehler festgestellt werden, braucht nur vorgegeben zu werden, daß das Stellaggregat von seinem Antrieb abgekoppelt wird und damit seinen frei beweglichen Zustand einnimmt. Sodann kann das Federaggregat das maximale Übersetzungsverhältnis einstellen. Im Falle einer Vierradlenkung eines Kraftfahrzeuges bedeutet dies, daß die Hinterräder mit relativ großen Lenkwinkeln gleichsinnig zu den Vorderrädern ausgelenkt werden. Damit wird ein unter allen Umständen sicheres - wenn auch in der Regel nicht optimales - Betriebsverhalten der über das Getriebe verbundenen Aggregate gewährleistet. Ein Fahrzeug mit einer derartigen Lenkeinstellung ist auch bei hohen Geschwindigkeiten absolut sicher, da es sich um die Hochgeschwindigkeitseinstellung der Lenkung handelt.

Als Eingangselement wird vorzugsweise ein mit der Schwinge über einen Eingangslenker gekoppelter Eingangshebel angeordnet, welcher kürzer als der wirksame Hebelarm ist, mit dem der Eingangslenker an der Schwinge relativ zu deren stationärer Schwenkachse angreift. Damit kann in einer für die Hinterradlenkung erwünschten Weise gewährleisten werden, daß das Übersetzungsverhältnis des Getriebes bei größer werdenden Schwenkhüben des Eingangshebels abnimmt.

Außerdem sollte der Eingangslenker in der Mittel- bzw. Ausgangslage des Eingangshebels, wenn die Schwinge ihre Normallage einnimmt, sowohl mit der Längsachse des Eingangshebels als auch mit einem von der stationären Schwenkachse der Schwinge ausgehenden und das schwingenseitige Gelenk des Eingangslenkers durchsetzenden Radialstrahl einen rechten Winkel bilden. Damit ist gewährleistet, daß einander entgegengesetzte Schwenkhübe des Eingangshebels aus dessen Mittel- bzw. Ausgangslage gleich große einander entgegengesetzte Schwenkhübe des Ausgangshebels bewirken.

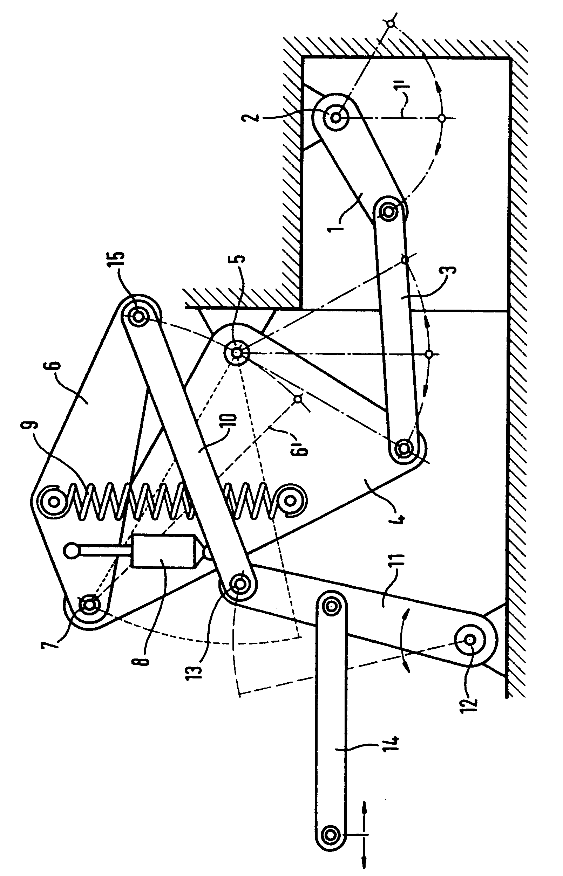

Im übrigen wird hinsichtlich bevorzugter Merkmale der Erfindung auf die Ansprüche sowie die nachfolgende Erläuterung einer bevorzugten Ausführungsform des erfindungsgemäßen Getriebes anhand der Zeichnung verwiesen.

Dabei zeigt die einzige Figur eine schematisierte Seitenansicht des Getriebes in Richtung der stationären Schwenkachse der Schwinge.

Das Getriebe besitzt einen stationär gelagerten Eingangshebel 1, welcher aus seiner Mittel- bzw. Ausgangslage 1' um einen Winkel von etwa 45° nach rechts und links um die Achse 2 geschwenkt werden kann. Mittels eines Eingangslenkers 3 ist der Eingangshebel 1 mit einer Schwinge 4 gekoppelt, die an einem stationären Lager um eine Achse 5 schwenkbar angeordnet ist. Der Abstand des schwingenseitigen Gelenkes des Eingangslenkers 3 von der Schwenkachse 5 der Schwinge 4 ist deutlich größer als der wirksame Hebelarm des Eingangshebels 1. Außerdem ist das stationäre Lager der Schwinge 4 so angeordnet, daß der Eingangslenker 3 in der Mittel- bzw. Ausgangslage 1' des Eingangshebels 1 sowohl mit dem Eingangshebel 1 als auch mit einem von der Achse 5 ausgehenden und das schwingenseitige Gelenk des Eingangslenkers 3 durchsetzenden Radialstrahl rechte Winkel bildet.

Durch die relativ kurze Länge des Eingangslenkers 3 wird erreicht, daS die Schwinge 4 bei Schwenkhüben des Eingangslenkers 3 im Bereich seiner Mittel- bzw. Ausgangslage 1 deutlich größere Schwenkausschläge ausführt als bei Schwenkbewegungen des Eingangslenkers 3 im Bereiche seiner rechten oder linken Endlagen.

Durch die angegebene Stellung des Eingangslenkers 3 in der Mittel- bzw. Ausgangslage 1' des Eingangshebels 1 wird erreicht, daS die Schwinge 4 gleich große Schwenkausschläge nach rechts oder links ausführt, wenn der Eingangshebel 1 aus seiner Mittel- bzw. Ausgangslage 1 um gleiche Winkel nach rechts oder links verstellt wird.

An der Schwinge 4 ist mit Abstand von der Achse 5 ein Stellhebel 6 um eine schwingenseitige Achse 7 schwenkverstellbar angeordnet. Zur Verstellung des Stellhebels 6 dient ein - beispielsweise hydraulisch betätigtes - Kolben-Zylinder-Aggregat 8, welches mit Abstand von der Achse 7 einerseits an der Schwinge 4 und andererseits am Stellhebel 6 angelenkt ist. Parallel zum Kolben-Zylinder-Aggregat 8 ist eine Feder 9 angeordnet, welche den Stellhebel 6 relativ zur Schwinge 4 in seine eine Endlage zu drängen sucht. Im dargestellten Beispiel ist die Feder 9 als Zugfeder ausgebildet, die den Stellhebel 6 in seine untere Endlage 6′ zu ziehen sucht, in der das von der Achse 7 entfernte Ende des Stellhebels 6 in der dargestellten Ansicht unterhalb der Schwenkachse 5 der Schwinge 4 liegt.

Am von der Achse 7 abgewandten Ende des Stellhebels 6 ist ein Lenker 10 angelenkt. Dabei ist der Abstand des Gelenkes 15 zwischen Lenker 10 und Stellhebel 6 von dessen schwingenseitiger Schwenkachse 7 gleich groß wie der Abstand zwischen dieser Achse 7 und der Schwenkachse 5 der Schwinge 4.

Das andere Ende des Ausgangslenkers 10 ist gelenkig mit einem Ausgangshebel 11 verbunden, welcher mit Schwenkbarkeit um eine Achse 12 stationär gelagert ist. Dabei sind die Achse 12 und die Länge des Ausgangshebels 11 derart angeordnet bzw. bemessen, daß der Ausgangshebel 11 in der Mittel- bzw. Ausgangslage 1′ des Eingangshebels 1 parallel zum Eingangshebel 1 ausgerichtet ist und die Gelenkachse 13 des Gelenkes zwischen Ausgangshebel 11 und Lenker 10 in die Achse 7 des Gelenkes zwischen Schwinge 4 und Stellhebel 6 fällt.

Am Ausgangshebel 11 kann eine Stange 14 angelenkt sein, welche den Schwenkhub des Ausgangshebels 11 in eine translatorische Schubbewegung einer mit der Stange 14 gelenkig verbundenen Schubstange (nicht dargestellt) umsetzt. Stattdessen kann der Ausgangshebel 11 auch eine mit ihm drehfest verbundene Welle mit in die Achse 12 fallender Wellenachse drehend verstellen.

Durch die Lage des Stellhebels 6 relativ zur Schwinge 4 wird das Übersetzungsverhältnis zwischen dem Schwenkhub des Eingangshebels 1 und dem Schwenkhub des Ausgangshebels 11 bestimmt. Falls die Gelenkachse 15 des Gelenkes zwischen dem Stellhebel 6 und dem Lenker 10 in die Schwenkachse 5 der Schwinge 4 fällt, hat das Übersetzungsverhältnis den Wert Null, d.h. der Ausgangshebel 11 bleibt auch bei Schwenkbewegungen des Eingangshebels 1 ständig in Ruhe. Wird der Stellhebel 6 so bewegt, daß die Gelenkachse 15 zwischen Stellhebel 6 und Lenker 10 aus einer Lage oberhalb der Schwenkachse 5 der Schwinge 4 in eine Position unterhalb dieser Achse 5 gelangt, so ändert sich das Vorzeichen des Übersetzungsverhältnisses. Liegt die Gelenkachse 15 in der dargestellten Ansicht unterhalb der Achse 5, so führen Eingangshebel 1 und Ausgangshebel 11 gleichsinnige Schwenkhübe aus. Falls die Gelenkachse 15 oberhalb der Achse 5 liegt, schwenken Eingangshebel 1 und Ausgangshebel 11 gegensinnig zueinander.

## Patentansprüche

1. Getriebe mit veränderbarem Übersetzungsverhältnis zwischen den Stellwegen eines Eingangs- und eines Ausgangselementes (1,14), wobei das Eingangselement (1) mit einer stationär drehgelagerten Schwinge (4) und die Schwinge (4) über einen Lenker (10) gelenkig mit dem Ausgangselement (14) gekoppelt und das schwingenseitige Gelenk (15) des Lenkers (10) mittels eines Stellaggregates (8) relativ zur Schwinge (4) auf einer die stationäre Schwenkachse (5) der Schwinge (4) durchsetzenden Bogenbahn verstellbar ist, deren Zentrum in der einer Mittel- bzw. Ausgangslage des Eingangselementes zugeordneten Normalstellung der Schwinge (4) in die zur stationären Schwenkachse (5) der Schwinge (4) parallele Achse des ausgangsseitigen Gelenkes (13) des Lenkers (10) fällt,
**dadurch gekennzeichnet,**
daß an der Schwinge (4) ein Stellhebel (6) angeordnet ist,
an dessen freiem Ende das schwingenseitige Gelenk (15) des Lenkers (10) angelenkt ist und dessen schwingenseitige Lagerachse (7) in der Normalstellung der Schwinge (4) mit der Achse des ausgangsseitigen Gelenkes (13) des Lenkers (10) zusammenfällt, und
daß der Stellhebel (6) mittels des Stellaggregates (8), welches selbsthemmungsfrei ausgebildet und zwischen Schwinge (4) und Stellhebel (6) angeordnet ist, steuerbar und mittels eines Federaggregates (9) relativ zur Schwinge (4) in seine eine Endlage beaufschlagt ist, in der das maximale Übersetzungsverhältnis eingestellt ist.

2. Getriebe nach Anspruch 1,
**dadurch gekennzeichnet,**
daß als Stellaggregat ein Kolben-Zylinder-Aggregat (8) angeordnet ist.

3. Getriebe nach einem der Ansprüche 1 oder 2,
**dadurch gekennzeichnet,**
daß das Federaggregat (9) parallel zum Stellaggregat (8) angeordnet ist.

4. Getriebe nach einem der Ansprüche 1 bis 3,
**dadurch gekennzeichnet,**
daß als Eingangselement ein mit der Schwinge über einen Eingangslenker (3) gekoppelter Eingangshebel (1) angeordnet ist, der kürzer als der wirksame Hebelarm ist, mit dem der Eingangslenker (3) an der Schwinge (4) relativ zu deren stationärer Achse (5) angreift.

5. Getriebe nach einem der Ansprüche 1 bis 4,
**dadurch gekennzeichnet,**
daß ein mit dem Ausgangselement (14) gekoppelter Ausgangshebel (11) sowie ein von der stationären Achse (5) der Schwinge (4) ausgehender und das Gelenk zwischen Schwinge (4) und Eingangslenker (3) durchsetzender Radialstrahl in Mittel- bzw. Ausgangslage (1') des Eingangshebels (1) parallel zum Eingangshebel (1) und der Eingangslenker (3) rechtwinklig zum Eingangshebel (1) ausgerichtet sind.

6. Getriebe nach Anspruch 5,
**dadurch gekennzeichnet,**
daß der Lenker (10) in Mittel- bzw. Ausgangslage (1') des Eingangshebels (1) parallel zum Eingangslenker (3) liegt.

## Claims

1. Gearing with variable transmission ratios between the regulating distances of an input and an output means (1, 14), whereby the input means (1) is coupled with a rocking arm (4) which is supported from a stationary position from which it can pivot and the rocking arm (4) is coupled in an articulate way with the output means (14) by means of a guide rod (10) and the link (15) on the rocker side of the guide rod (10) can be moved on one of the stationary pivot axes (5) of the arc which the rocker arm (4) passes through, in relation to the rocker arm (4), by means of a setting unit (8), the centre of said arc falling in the normal position of the rocker arm (4) associated with a central or output position of the input means in the axis of the link (13) on the output side of the guide rod (10) which lies parallel to the stationary pivot axis (5) of the rocker arm (4), wherein an adjustable lever (6) is disposed on the rocker arm (4), the link (15) on the rocking side of the guide rod (10) being articulated on the free end of said adjustable lever (6) and the support axis (7) on the rocking side of the adjustable lever (6) goes down in the normal position of the rocker arm (4) with the axis of the link (13) on the output side of the guide rod (10), and the adjustable lever (6) is loaded, in its end position relative to the rocker arm (4), controllably and by means of a spring set (9), by means of the setting unit (8) which is disposed between the rocker arm (4) and the adjustable lever (6) and is developed so as to be free of self-locking.

2. Gearing according to claim 1 wherein a piston-cylinder unit (8) is disposed as a setting unit (8).

3. Gearing according to either of claims 1 or 2 wherein the spring set (9) is disposed parallel to the setting means (8).

4. Gearing according to any of claims 1 to 3 wherein an input lever (1) coupled with the rocker arm by means of an input guide rod (3) is disposed as an input means, said input lever being shorter than the effective lever arm, the input guide rod (3) engaging with the said input lever (1) on the rocker arm (4) in relation to the stationary axis (5) of the said rocker arm (4).

5. Gearing according to any of claims 1 to 4 wherein an output lever (11) which is coupled with the output means (14) and also a radial line going out from the stationary axis (5) of the rocker arm (4) and passing through the link between rocker arm (4) to the input guide rod (3), is directed parallel to the input lever (1) and the input guide rod (3), and the input guide rod (3) is directed at right-angles to the input lever (1), in the middle or output position (1') of the input lever (1).

6. Gearing according to claim 5 wherein the guide rod (10) is placed in the central or output position (1') of the input lever (1) parallel to the input guide rod (3).

## Revendications

1. Boite de vitesses à rapport de transmission variable entre les parcours de réglage d'un élément d'entrée (1) et d'un élément de sortie (14), l'élément d'entrée (1) étant couplé avec un balancier (4) monté fixe en rotation et le balancier (4) étant couplé, par l'intermédiaire d'un bras oscillant (10), de manière articulée, avec l'élément de sortie (14) et l'articulation (15) côté balancier du bras oscillant (10) étant réglable au moyen d'un groupe de réglage (8), par rapport au balancier (4), sur une trajectoire en arc traversant l'axe de pivotement (5) fixe du balancier (4), trajectoire dont le centre coïncide dans la position normale du balancier (4), correspondant à une position centrale ou une position initiale de l'élément d'entrée, avec l'axe, parallèle à l'axe de pivotement (5) fixe du balancier (4), de l'articulation (13) côté sortie du bras oscillant (10), caractérisée en ce que sur le balancier (4) est prévu un levier de réglage (6) à l'extrémité libre duquel s'articule l'articulation (15) côté balancier du bras oscillant (10) et dont l'axe d'appui (7) côté balancier coïncide, dans la position normale du balancier (4), avec l'axe de l'articulation (13) côté sortie du bras oscillant (10) et en ce que le levier de réglage (6) peut être commandé au moyen du groupe de réglage (8) qui n'est pas autobloquant et qui est placé entre le balancier (4) et le levier de réglage (6), et en ce que le levier de réglage (6) est amené, au moyen d'un groupe à ressorts (9), dans l'une de ses positions de fin de course par rapport au balancier (4), dans laquelle règne le rapport de transmission maximal.

2. Boîte de vitesses selon la revendication 1, caractérisée en ce qu'il est prévu comme groupe de réglage un ensemble cylindre et piston (8).

3. Boîte de vitesses selon l'une des revendications 1 ou 2, caractérisée en ce que le groupe à ressorts (9) est parallèle au groupe de réglage (8).

4. Boîte de vitesses selon l'une des revendications 1 à 3, caractérisée en ce qu'il est prévu comme élément d'entrée un levier d'entrée (1), couplé avec le balancier par l'intermédiaire d'un bras oscillant d'entrée (3), lequel levier d'entrée est plus court que le bras de levier utile par lequel le bras oscillant d'entrée (3) agit sur le balancier (4) par rapport à son axe (5) fixe.

5. Boîte de vitesses selon l'une des revendications 1 à 4, caractérisée en ce qu'un levier de sortie (11), couplé avec l'élément de sortie (14), ainsi qu'un rayon, partant de l'axe (5) fixe du balancier (4) et traversant l'articulation entre le balancier (4) et le bras oscillant d'entrée (3), en position centrale ou position initiale (1') du levier d'entrée (1), est parallèle au levier d'entrée (1) et le bras oscillant d'entrée (3) est perpendiculaire au levier d'entrée (1).

6. Boîte de vitesses selon la revendication 5, caractérisée en ce que le bras oscillant (10), en position centrale ou position initiale (1') du levier d'entrée (1), est parallèle au bras oscillant d'entrée (3).
